# EUROPEAN PATENT SPECIFICATION

(11) **EP 0 367 352 B1**
(45) Date of publication and mention of the grant of the patent: **26.05.1993**
(21) Application number: 89202758.2
(22) Date of filing: 01.11.1989
(51) Int. Cl.: F23D 14/82, F23D 14/62, F23D 14/66, C01B 3/36

(54) **Gas burner with a premixing/preheating zone**
Gasbrenner, welcher eine Vorvermischungs-/Vorheizungszone umfasst
Brûleur de gaz comprenant une zone de prémélange/préchauffage

(30) Priority: 01.11.1988 GB 8825515
(43) Date of publication of application: 09.05.1990
(73) Proprietor: SHELL INTERNATIONALE RESEARCH MAATSCHAPPIJ B.V., 2596 HR Den Haag (NL)
(72) Inventor: Van der Burgt, Maarten Johannes, NL-2596 HR Den Haag (NL)

(56) References cited:
- WO-A-86/06155
- GB-A- 2 054 822
- ERDOL UND KOHLE ERDGAS PETROCHEMIE. vol. 17, no. 8, August 1964, LEINFELDEN DE pages 628 - 630; J. Neumann: "Durchschlagsfeste Kapillarsicherungen"
- R. Günther, "Verbrennung und Feuerungen", Chapter 3.5: "Brenner für Vormischflammen", pp. 117-118, Springer-Verlag, 1974.

## Description

The invention relates to a gas burner provided with a premixing/preheating zone for partial combustion of a gaseous fuel and an oxidant.

In such a burner the fuel is introduced together with an oxygen-containing gas into a reactor space operating under appropriate pressure conditions for producing for example synthesis gas, fuel gas or reducing gas.

Partial combustion, also known as gasification, of a gaseous fuel is obtained by the reaction of the fuel with oxygen. The fuel contains as combustable components, mainly carbon and hydrogen, which react with the supplied oxygen - and possibly with any steam and carbon dioxide as may be present - to form carbon monoxide and hydrogen. At some temperatures it is also possible to form methane.

In the reactor a flame is maintained in which the fuel reacts with oxygen-containing gas at high temperatures.

The fuel is usually passed into the reactor via the burner, and the oxygen-containing gas is also passed via the burner into the reactor. In some processes a moderator gas such as steam or carbon dioxide is also passed via the burner to the reactor; such a moderator gas is often advantageous for controlling the gasification temperature.

The reactants can be introduced in any desired manner, e.g., horizontally or vertically, into the reaction zone of a conventional refractory lined partial oxidation gas generator, and in particular gasification apparatus can be provided with a plurality of burners for the reactants positioned on substantially opposite sides of the combustion zone, whereby the reactants are introduced horizontally and the burner jets impinge on each other to facilitate the partial oxidation process and to minimize erosion of the refractory wall.

Since flame temperatures may exceed 2000 °C or more, a primary concern of such burners is to prevent damage to the burner front, also referred to as the burner face, caused by the high heat flux during the gasification process. To protect the burner front from overheating, it has been suggested to provide a refractory lining applied to the outer surface of the burner front wall and/or provide a hollow wall member with internal cooling passages through which cooling fluid is circulated at a rapid rate.

In particular, the invention relates to a specific gas burner which is applied in gas-fired furnaces and gasifiers. In gas-fired furnaces and gasifiers reducing gases such as CO, H₂, hydrocarbons, and oxidizing gases such as air, O₂ have to be mixed and for an efficient operation preheating of these gases is often required.

Preheating is, in particular, a problem for oxygen as materials applied do not allow preheating over 200-250 °C.

As far as mixing is concerned this is mostly accomplished just before or beyond the mouth of the burner.

Premixing within the burner is generally not carried out because of the danger of flashback and/or explosion.

Thus, it is an object of the invention to provide a gas burner provided with a premixing/preheating zone to be used for partial combustion of a gaseous fuel and oxidant wherein explosive gas mixtures can be premixed and/or preheated prior to their partial combustion.

It is another object of the invention to provide such a burner with low HCN formation and/or low or non soot gasification.

Therefore, the invention provides a burner for partial oxidation of a gaseous fuel and an oxidant, comprising a housing having a gas inlet to which a supply of gaseous fuel and oxidant are connected, said housing being further provided with a gas outlet in communication with the burner, characterized in that said housing is hollow and horizontal and is partially filled with a layer of loose particles which rest on a supporting structure within said housing, said loose particles extending between both the vertical end walls and the side walls of the cylinder, said layer performing the functions of pre-mixing the gases and a flame arrester, said inlet for the gaseous fuel and oxidant being arranged below said supporting structure and said gas outlet being arranged above said layer of particles.

The invention has been based upon the step of mixing the two reactants (gaseous fuel, oxidant) when relatively cold (i.e. well below their ignition temperature) and leading the gas mixture thus obtained through an inert packing. Advantageously, such an inert packing may consist of beads, raschig rings or wire mesh.

In this manner a good premixing is ensured whereas any onset of combustion is smothered.

Further, the packing allows the installation of heat exchange surfaces for (further) preheating of the gas mixture.

Advantageously, the device of the invention comprises a shell and tube heat exchanger in which the gases are mixed and heated in a space filled with packing material, in which tubes are arranged through which heating medium is flowing.

It is remarked, that WO-A-8,606,155 discloses a burner where, apparently, the combustion gas is sent through a packing material before being combusted on the surface of the material together with air/an oxygen carrier which bypasses the material. However, this document does not suggest a solution to the problem of ensuring a good pre-mixing of an oxygen-containing gas and fuel without combustion as there is no pre-mixing.

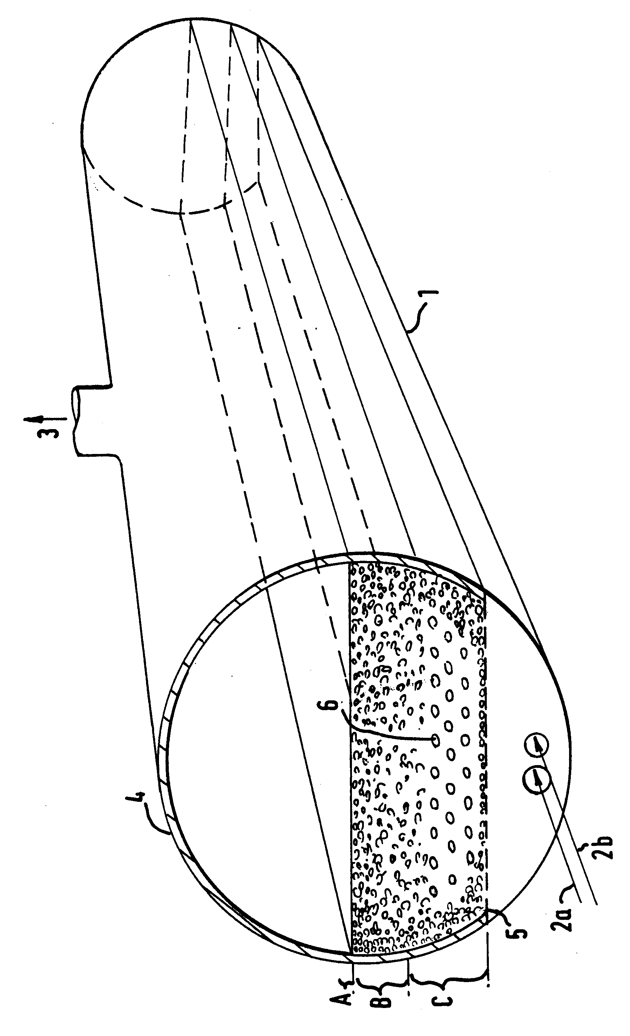

The invention will now be described by way of example in more detail by reference to the accompanying drawing, in which the figure represents a view of an advantageous embodiment of the present invention. Referring to the figure a reactor for partial combustion consists of a housing 1 provided with a gas inlet (2a, 2b) for fuel (advantageously natural gas) and oxidant, and a gas outlet 3. Typical dimensions of such a reactor are as follows: length: 10 metres, and diameter: 5 metres. The reactor is provided with a reaction zone A, a flame arresting zone B and a premixing and preheating zone C. The zones B and C are filled with a layer of particulate matter or packing material and extending between the said inlet and said outlet. Advantageously the reactor is a horizontal cylindrical vessel in which the porous or packing material consists of a layer of loose particles (for example sand or aluminium grains) which rest on a supporting structure 5 arranged in any manner suitable for the purpose in said reactor. The inner wall of the reactor is advantageously provided with an insulating refractory 4. Through the gas inlet a gaseous fuel (for example natural gas or methane) and an oxidant (for example oxygen-containing gas or oxygen) are supplied to the premixing zone C. In the zone C premixing of the fuel and oxidant takes place and subsequently the gaseous mixture is fed through the porous layer on the support grid 5 to the reaction zone A and the synthesis gas obtained is fed to the gas outlet 3.

Advantageously, preheating means such as a plurality of heat exchange pipes 6 can be arranged in any suitable manner in or below the packing material in the premixing zone. However, it will be appreciated that such heat exchange pipes are optional.

Advantageously the particles can be either refractory or metallic.

In this manner the porous burner will not develop fissures due to expansion etc. and very large capacity burners can thus be made.

## Claims

1. A burner for partial oxidation of a gaseous fuel and an oxidant, comprising a housing (1) having a gas inlet (2a, 2b) to which a supply of gaseous fuel and oxidant are connected, said housing being further provided with a gas outlet (3) in communication with the burner, characterized in that said housing (1) is a hollow horizontal cylinder and is partially filled with a layer of loose particles which rest on a supporting structure within said housing (1), said loose particles extending between both the vertical end walls and the side walls of the cylinder, said layer performing the functions of pre-mixing the gases and a flame arrester, said inlet (2a, 2b) for the gaseous fuel and oxidant being arranged below said supporting structure (5) and said gas outlet (3) being arranged above said layer of particles.

2. The burner as claimed in claim 1 characterized in that a plurality of heat exchange pipes (6) is arranged in the premixing and/or preheating zone.

3. The burner as claimed in claims 1 or 2 characterized in that the inert packing consists of beads.

4. The burner as claimed in claims 1 or 2 characterized in that the particles are refractory.

5. The burner as claimed in claims 1 or 2 characterized in that the particles are metallic.

6. The burner as claimed in claims 1 or 2 characterized in that the particles are sand.

7. The burner as claimed in claim 5 characterized in that the particles are aluminium grains.

## Patentansprüche

1. Ein Brenner für Teiloxidierung eines gasförmigen Brennstoffs und eines Oxidationsmittels, das ein Gehäuse (1) aufweist, welches über einen Gaseinlaß (2a, 2b) verfügt, mit dem eine Zuleitung für gasförmigen Brennstoff und Oxidationsmittel verbunden sind, wobei das Gehäuse ferner über einen Gasauslaß (3) verfügt, der mit dem Brenner verbunden ist, dadurch **gekennzeichnet,**
daß das Gehäuse (1) ein hohler horizontaler Zylinder ist und teilweise mit einer Schicht loser Partikel gefüllt ist, welche auf einer Trägerstruktur innerhalb des Gehäuses (1) liegen, wobei die losen Partikel sich sowohl zwischen den vertikalen Endwandungen als auch den Seitenwänden des Zylinders befinden, wobei die Schicht die Funktionen eines Vorvermischens des Gases und eines Flammenaufhalters ausüben, wobei der Einlaß (2a, 2b) für den gasförmigen Brennstoff und das Oxidationsmittel unterhalb der Trägerstruktur (5) angeordnet ist und der Gasauslaß (3) oberhalb der Partikelschicht angeordnet ist.

2. Der Brenner nach Anspruch 1, dadurch gekennzeichnet, daß eine Vielzahl von Wärmeaustauschrohren (6) in der Vorvermischungszone und/oder der Vorerhitzungszone angeordnet ist.

3. Der Brenner nach Anspruch 1 oder 2, dadurch gekennzeichnet, daß die inerte Packung aus Kügelchen besteht.

4. Der Brenner nach einem der Ansprüche 1 oder 2, dadurch gekennzeichnet, daß die Partikel feuerfest sind.

5. Der Brenner nach einem der Ansprüche 1 oder 2, dadurch gekennzeichnet, daß die Partikel metallisch sind.

6. Der Brenner nach einem der Ansprüche 1 oder 2, dadurch gekennzeichnet, daß die Partikel Sand sind.

7. Der Brenner nach Anspruch 5, dadurch gekennzeichnet, daß die Partikel Aluminiumkörner sind.

## Revendications

1. Brûleur pour l'oxydation partielle d'un combustible gazeux et d'un oxydant, comprenant une enceinte (1) possédant une entrée de gaz (2a, 2b) à laquelle sont reliées des alimentations en combustible gazeux et en oxydant, ladite enceinte étant en outre pourvue d'une sortie de gaz (3) en communication avec le brûleur, caractérisé en ce que ladite enceinte (1) est un cylindre creux horizontal et est partiellement remplie d'une couche de particules non agrégées qui repose sur une structure de support à l'intérieur de ladite enceinte (1), lesdites particules non agrégées s'étendant entre les deux parois d'extrémité verticales et les parois latérales du cylindre, ladite couche remplissant les fonctions consistant à prémélanger les gaz et à arrêter la flamme, ladite entrée pour le combustible gazeux et pour l'oxydant étant agencée au-dessous de ladite structure de support et ladite sortie de gaz étant agencée au-dessus de ladite couche de particules.

2. Brûleur tel que revendiqué dans la revendication 1, caractérisé en ce que un groupe de tubes d'échange de chaleur (6) sont agencés dans la zone de prémélange et/ou la zone de préchauffage.

3. Brûleur tel que revendiqué dans la revendication 1 ou 2, caractérisé en ce que le remplissage inerte se compose de grains sphériques.

4. Brûleur tel que revendiqué dans la revendication 1 ou 2, caractérisé en ce que les particules sont réfractaires.

5. Brûleur tel que revendiqué dans la revendication 1 ou 2, caractérisé en ce que les particules sont métalliques.

6. Brûleur tel que revendiqué dans la revendication 1 ou 2, caractérisé en ce que les particules sont du sable.

7. Brûleur tel que revendiqué dans la revendication 5, caractérisé en ce que les particules sont des grains d'aluminium.
